# EUROPEAN PATENT SPECIFICATION

(11) **EP 1 295 422 B1**
(45) Date of publication and mention of the grant of the patent: **06.08.2008**
(21) Application number: 01932466.4
(22) Date of filing: 16.05.2001
(51) Int. Cl.: H04J 14/02, H04B 10/12, H04Q 11/00, H04B 10/20

(54) **ARRANGEMENT AND METHOD RELATING TO THE PROVISION OF SERVICES IN A TELECOMMUNICATIONS SYSTEM**
ANORDNUNG UND VERFAHREN BEZÜGLICH DER DIENSTEBEREITSTELLUNG IN EINEM TELEKOMMUNIKATIONSSYSTEM
SYSTEME ET PROCEDE CONCERNANT LA FOURNITURE DES SERVICES DANS UN SYSTEME DE TELECOMMUNICATIONS

(30) Priority: 30.05.2000 SE 0002002
(43) Date of publication of application: 26.03.2003
(73) Proprietor: TELEFONAKTIEBOLAGET LM ERICSSON (publ), 164 83 Stockholm (SE)
(72) Inventor: LINDEN, Kjell, S-129 43 Hägersten (SE)
(74) Representative: Sjöberg, Mats Hakan
(86) International application number: PCT/SE2001/001072
(87) International publication number: WO 2001/093480

(56) References cited:
- US-A- 5 572 347
- P. IANNONE ET AL.: 'High-speed point-to-point and multiple broadcast services delivered over a WDM passive optical network' IEEE PHOTONICS TECHNOLOGY LETTERS vol. 10, September 1998, pages 1328 - 1330, XP000783242
- J. YEH ET AL.: 'DWDM architectures for video on demand transport and distribution', XP010352590 Nanostructures and Quantum Dots/WDM Compontents/VCSELs and Microcavaties /RF Photonics for CATV and HGC Systems, 1999 Digest of rhe LEOS Summer Topical Meetings, 26-30 July 1999 * page IV25 - page IV26 *
- N. GHANI ET AL.: 'On IP-over-WDM integration' IEEE COMMUNICATIONS MAGAZINE vol. 38, no. 3, March 2000, pages 72 - 84, XP002174082
- P. IAMNONE ET AL.: 'Wavelength-division multiplexed passive optical networks as a multiple service provide access platform' LASERS AND ELECTRO-OPTICS SOCIETY ANNUAL MEETING, 1996. LEOS'97 10TH ANNUAL MEETING. CONFERENCE PROCEEDINGS. IEEE vol. 2, 10 November 1997 - 13 November 1997, pages 85 - 86, XP010252708
- S. SEN ET AL.: 'A QoS management framework for 3G wireless networks' WIRELESS COMMUNICATIONS AND NETWORKING CONFERENCE, 1999. WCNC 1999 IEEE vol. 3, 21 September 1999 - 24 September 1999, pages 1273 - 1277, XP010353695

## Description

### FIELD OF THE INVENTION

The present invention relates to the provision of communication between a number of service networks and a number of second, local telecommunication systems using a first telecommunications system using a first communication protocol. The invention also relates to a method of providing communication between a number of service networks and a number of second, local telecommunication systems using a first communication system. Particularly it relates to providing end users with services.

### STATE OF THE ART

Due to the exceedingly fast development within the fields of data and telecommunication, it has become possible to deliver more services to users. One and the same network can be used to provide users with different services and it has become possible to customize the offering of services. Customization is enabled on different levels, to individual users or to groups of private users, to companies, to individual users or groups of users within the companies etc.

One technique that is known to use to distribute services to users is based on using so called Virtual Broadcast Domains. More commonly is referred to Virtual Local Networks which is a subgroup of virtual broadcast domains. Virtual Local Networks are sometimes denoted VLANs (Virtual Local Area Network). VLAN is a marketing term used by most switch manufactures but it is not defined in detail. This means that different manufacturers can use the same term without their equipments being compatible. Below a broad definition covering the equipment of most manufacturers is given: VLAN is a logical layer two (link layer) broadcast domain. The selection from the total broadcast domain, i.e. all ports and MAC-addresses (Medium Access Control), can be done in different ways, namely through selecting a group of ports, through selecting a group of MAC-addresses, or through selection of a protocol, for example IP or IPX. The standard IEEE 802.1Q, is based on standard LAN-switches according to IEEE 802.2-Standards. Switches implementing IEEE 802.1Q are in principle compatible with the standard IEEE 802.1D (LAN-switches) which are modified in that the rules relating to input/output data packets are modified and, an additional protocol to identify the LAN-capability of other switches and connected end user systems is provided. Furthermore a VLAN transport mechanism is provided according to which data packets are VLAN marked using specific identification bits in the packets.

The standard IEEE 802.1D describes how a LAN-switch should act. A LAN-switch should deliver user data at layer two of the OSI-stack, based on MAC-addressing. Rules are given relating to logical ports etc.

Virtual Local Networks are used to reduce costs for changing, adding or moving end user equipment for example within companies. For example all users and resources of a particular department within a company can be associated to one VLAN. In that manner it gets possible to add or remove or change equipment, move staff etc. without changing cables, moving cables or changing access filters in IP routers etc. Various solutions are known for providing services from service networks or service providers to end users.

US-A-5 572 347 relates to a switched video architecture and it shows an integrated fibre optic telecommunications network providing switched video and standard narrow band telephone services. This solution is integrated in so far that it transmits video services on the same fibre as narrow band services and it uses common equipment to support both this services. Frequency division multiplexing of the narrow band telephone service and control signals with FM channels for video distribution is used. This solution is however not flexible enough and exclusively it relates to some specific services and it leaves a lot to desire. Also other systems are known, such as EP-A-0 730 383, which shows a distributed system architecture for digital broadcast and interactive services. The system also uses frequency division multiplexing to facilitate analog distribution and to make it compatible with distribution systems providing analog services. The system is also not sufficiently flexible and it is only intended for video services.

In a publication by P. Iannone et al.: "High speed point-to-point and multipoint broadcast services delivered over a WDM passive optical network", IEEE PHOTONICS TECHNOLOGY vol.10, September 1998, pages 1328- 1330, XP000783242, is disclosed a system with a number of services which are delivered to receivers via a common WDM network. The services are allocated to separate wavelength bands, which are multiplexed and transmitted over the WDM network. Each of the wavelength bands are passed to the different receivers.

In an article by J. Yeh et al.: "DWDM Architectures for Video on Demand Transport and Distribution" XP010352590 Nanostructures and Quantum Dots/WDM Components/VCSELs and Microcavaties/RF Photonics for CATV and HGS Systems, 1999 Digest of the LEOS Summer Topical Meetings, 26-30 July 1999, page IV25-page IV26, is disclosed a DWDM system utilizing sub-carrier multiplexing to transport IP data, broadcast video and video on demand (VOD) on lightwave carriers. VOD programs are routed by wavelength to hubs and each wavelength can carry multiple quadrature modulated channels. The carriers are demultiplexed and the services are provided directly to set top boxes of the customers.

### SUMMARY OF THE INVENTION

It has been realized that local systems, such as Broadband Ethernet access systems, could be used to provide a path for the Service Provider all way to and from the end user over a common system. Ethernet based VLAN technology could e.g. be used within the local systems. However, it should be disadvantageous in that it is expensive since all service providers should need to install a proprietary fibre or fibres (or other cables) all the way from their respective service centers to the router switch of the local system. Thus, such a solution should not be entirely satisfactory. What is needed is therefore an arrangement for providing communication between service networks, particularly service providers and local communication systems using a first telecommunications system such that services can be provided to end users in a cheap and easy manner. An arrangement is also needed through which service networks and service providers are able to transfer services (requiring unidirectional or bidirectional communication, depending on which is the service) to end users in an efficient, safe and flexible manner. An arrangement is also needed through which it is possible to provide new services to end users, to make it possible for new service providers or service networks to provide their services to end users etc. An arrangement is also needed through which the maintenance costs are low for the service networks or service providers as well as an arrangement which is easy to build out, install etc. A method fulfilling the objects mentioned above is also needed. Particularly a solution is needed through which service networks, service providers in an easy, cheap and flexible manner are enabled to provide services to end users and through which, at the same time, the end users can select the currently needed services.

Therefore an arrangement is provided through which service networks, or particularly service providers, use a common first telecommunication system based on Wavelength Division Multiplexing (WDM) to reach local communication systems. According to the invention services are delivered over the WDM-based system to which the service network connects, and the wavelength channels carrying the respective services are mapped directly on virtual broadcasting domains within the second, local telecommunication systems. (Of course the concept covers services requiring bidirectional communication, such as e.g. telephony.)

A number of service networks are connected to one, or more, common first telecommunication systems which is/are WDM-based. A number of common service mapping centers are provided which include wavelength assigning means and multiplexing means for assigning specific wavelengths to a number of services/service networks and for multiplexing said wavelengths onto transmission means of the first, WDM-based, communication system.

A number of gateway arrangements are connected to the transmission means and each gateway arrangement includes wavelength (de)multiplexing means and routing/switching means for mapping or allocating the assigned specific wavelength channels directly onto predetermined virtual broadcast domains of a local communication system such that services can be provided to end users of the local communication systems. Particularly each gateway arrangement is connected to a switch for connecting the gateway to a switched domain. The virtual broadcast domains particularly comprise virtual local networks also called VLANs. The service networks particularly comprise service providers.

A Swedish Patent Application "ANORDNING OCH FÖRFARANDE VID SWITCHAT TELEKOMMUNIKATIONSSYSTEM", filed on June 15, 1999 by the same applicant solves the problem of, for an end user of a telecommunication system, selecting desired services amongst a plurality of offered services which are delivered on service networks by service providers. The service networks are grouped into service network groups with a desired content of services. The service network groups are assigned specific virtual broadcast domains carrying information from their respective service network group. The end users can then select services through selecting one or more of the virtual broadcast domains. According to this application different service networks such as for example telephony networks, Internet, cable TV networks, alarm or security networks etc. are connected to a switched domain, e.g. via a router. Through selections among the service networks these are arranged in service network groups in the desired manner. Each service network group is assigned at least one virtual broadcast domain through configuration of ports at the switches in the switched domain. End users can then select service network group through selecting one or more of the virtual broadcast domains. The switched domain has a device connection to which the end user can connect apparatuses and connects the selected virtual broadcast domain through configuration of the switch ports. When an end user wants to change the services, another virtual broadcast domain can be selected etc. It is done through reconfiguration of the ports of the switches and reconfiguration at the end user side. The service networks are separated from each other also on the virtual broadcasting domains since a specific type of connection elements, so called hubs, are excluded from the switched domain. In this document as well as in the present invention the term telecommunications system is given a very broad definition and it covers for example telephony systems, data communication systems, video communication systems and telemetric systems etc. This document is herewith incorporated herein by reference thereto. Although the present invention is not limited to any particular way of assigning or distributing services or service network groups on virtual broadcasting domains and virtual LANs or to how the end user can select services etc., it may with advantage be combined with the solution as disclosed in the above mentioned document resulting in apparent advantages for the service providers as well as for the end users.

In a particular implementation of the present invention the virtual broadcasting domains consist of virtual local area networks also called VLANs as also described in the above mentioned patent application. The service networks particularly comprise service providers. According to the inventive concept each service provider, or service network in more general terms, is connected to a Common Service Mapping Center (CSMC) and assigned one or more wavelengths in the common service mapping center. This means that a service provider can subscribe to one or more wavelengths. The wavelength assignment or subscription, in the common service mapping center, can be done in different ways. One service provider may be assigned (i.e. subscribe to) a plurality of wavelengths. Wavelengths may also be assigned to different services as provided by one and the same service provider etc. It is also possible that one service by the same or by different service providers is assigned one or more wavelengths.

In a particular implementation the common service mapping centers, also called teleports or telecities, are connected to the transmission means of a first communication system which transmission means comprises a wavelength multiplexed optical fiber. It may also be copper based. Any other appropriate physical means can also be used, e.g. the air. Thus a number of service providers or service networks use one and the same transmission medium of one and the same communication system to transfer their services to one or more local communication systems, for example through simple subscription to one or more wavelengths. According to different embodiments the WDM-based communication system may comprise a point-to-point transmission network. Alternatively it comprises a ring network or a star-shaped network. Particularly the first communication system is a Metropolitan Area Network. If the WDM-based communication system comprises a point-to-point transmission network, the multiplexing means of the common service mapping center particularly comprises an Optical Terminal Multiplexer whereas the demultiplexing means of the gateway arrangement, on the other hand, comprises another Optical Terminal Multiplexer (both OTMs providing for multiplexing as well as demultiplexing depending on direction of communication). If the WDM-based communication system comprises a ring network, the demultiplexing means of the gateway arrangements advantageously comprise so called Optical Add Drop Multiplexers (OADM) wherein the relevant wavelength are dropped whereas the others are sent on to a subsequent OADM in which they are to be dropped, (or added for traffic in the opposite direction).

The service networks or the service providers may use the same or different protocols. Protocols that can be used are for example PDH (Plesiochronous Digital Hierarchy), SDH (Synchronous Digital Hierarchy), SONET, ATM (Asynchronous Transfer Mode), Ethernet, IP (Internet Protocol), DTM (Dynamic synchronous Transfer Mode) etc. The WDM transport channels in an advantageous implementation comprise so called E1 channels, i.e. 2Mbps channels based on for example ATM, SDH, DTM or PDH. Of course also E2, E3, E4, E5 channels etc. can be used. The communication protocol or the transport protocol used as the WDM-channel in advantageous implementation comprises IP over WDM. But it may also be any other appropriate protocol, the main thing being that the routing/switching device of the gateway arrangement is able to handle such protocol. In a most particular implementation Ethernet over WDM is implemented.

In a particularly advantageous implementation, the local telecommunication systems comprise broadband access systems.

In advantageous implementations the local communication systems use Ethernet VLAN technology. Alternatively other link layer techniques can be used such as Token Ring and FDDI. It is also possible to use ATM. Over ATM (link layer) it is possible to use the by ATM forum defined standard LAN Emulation, LANE. Also LANE includes the functionality of creating logical broadcast domains over a link layer structure. This is possible even if ATM, as opposed to for example Ethernet and Token Ring, is a switched technique and not a broadcast technique.

In a particular implementation each wavelength on the WDM transport channel is assigned a separate input port at the routing/switching device of the gateway arrangement.

In one implementation the service networks or the service providers are dedicated or assigned a broadband channel all the way to the end users over the WDM-based first communication system.

Most advantageously the first communication system is IP-based, i.e. it uses TCP/IP (Transmission Control Protocol/Internet Protocol) and each routing device advantageously comprises an IP-router.

Therefore also a method as initially referred to is provided, which includes the steps of; assigning one or more specific wavelengths to each service network or specific service(s) of a service network; multiplexing the assigned specific wavelengths; transferring the multiplexed signal comprising the specific wavelengths over the first telecommunication system, which is WDM-based, to a gateway arrangement; demultiplexing the wavelength-multiplexed signal; assigning a virtual broadcasting domain to each wavelength; transferring services to respective end users using the appropriate virtual broadcasting domain.

In a particular implementation the method includes the steps of: for a ring-shaped network; dropping relevant wavelengths at an Optical Add Drop Multiplexer; demultiplexing the dropped wavelengths in the OADM; sending the other wavelengths on to other OADM:s until they are to be dropped. Preferably TCP/IP is used as a communication protocol by the first communication system (and the service networks and the local communications systems).

It is an advantage of the present invention that service providers can use common systems to reach local systems which strongly contributes in reducing the costs. It is also an advantage that service providers, particularly broadband service providers, can be connected to local systems or broadband islands in a cheap manner. It is also an advantage that it is possible to offer a dedicated broadband channel for service providers over common equipment to and from consumers/end users.

### BRIEF DESCRIPTION OF THE DRAWINGS

The invention will in the following be further described in a nonlimiting manner and with reference to the accompanying drawings, in which:
- Fig. 1: for explanatory reasons, shows how service providers can be connected to end users,
- Fig. 2: illustrates how service providers can be connected to end users according to a first embodiment of the present invention,
- Fig. 3: schematically illustrates a block diagram of a communication structure with different layers,
- Fig. 4: shows a more detailed block diagram of the arrangement for providing communication between service providers and a local communication system,
- Fig. 5: shows an implementation of the inventive concept to a ring-shaped first communication system,
- Fig. 6: is a flow diagram illustrating connection of service providers to a local network, and
- Fig. 7: is a very schematical flow diagram illustrating how end users can get access to specific services according to a particular implementation.

### DETAILED DESCRIPTION OF THE INVENTION

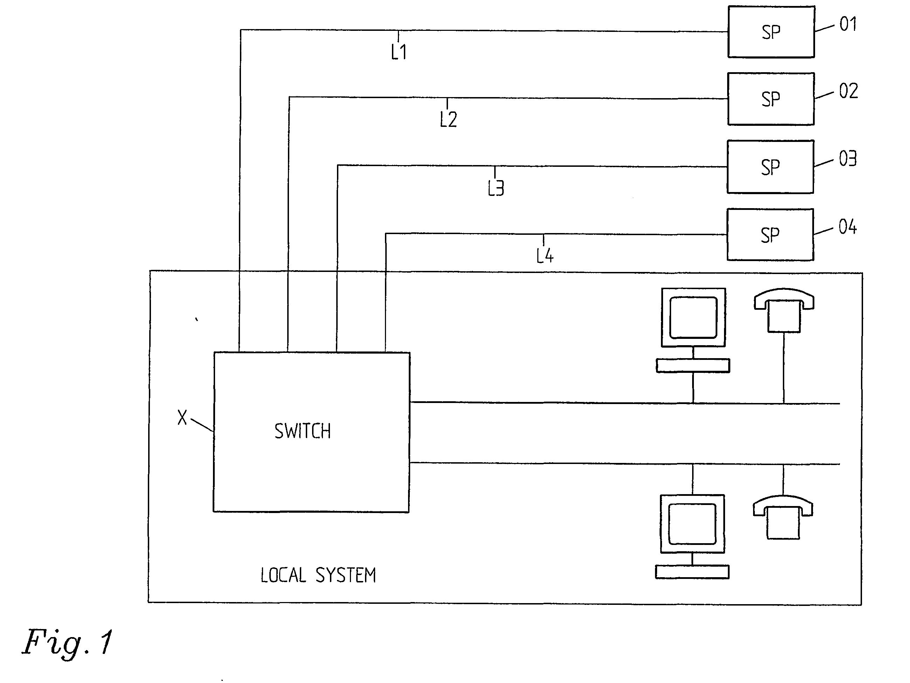

Fig. 1 is a simplified view of a system wherein a number of service providers SP01, SP02, SP03, SP04 have installed their own fibres L1, L2, L3, L4 or cables all the way from their respective service centers to a local communication system, i.e. to a switch X (or a router) of a local communication system with a number of end users. However, this is an expensive solution and moreover it is inflexible as discussed earlier in the application.

Generally a number of different telecommunication services and a number of data communication services are available over different service networks or from different service providers (of course some service providers may also provide different services). Moreover, different users or end users have the option to select one or more services and subscribe to them. The end user may be a private person or belong to some kind of a group, both private groups or groups within a company, or it may comprise a whole company etc. It may also be an area with domiciles.

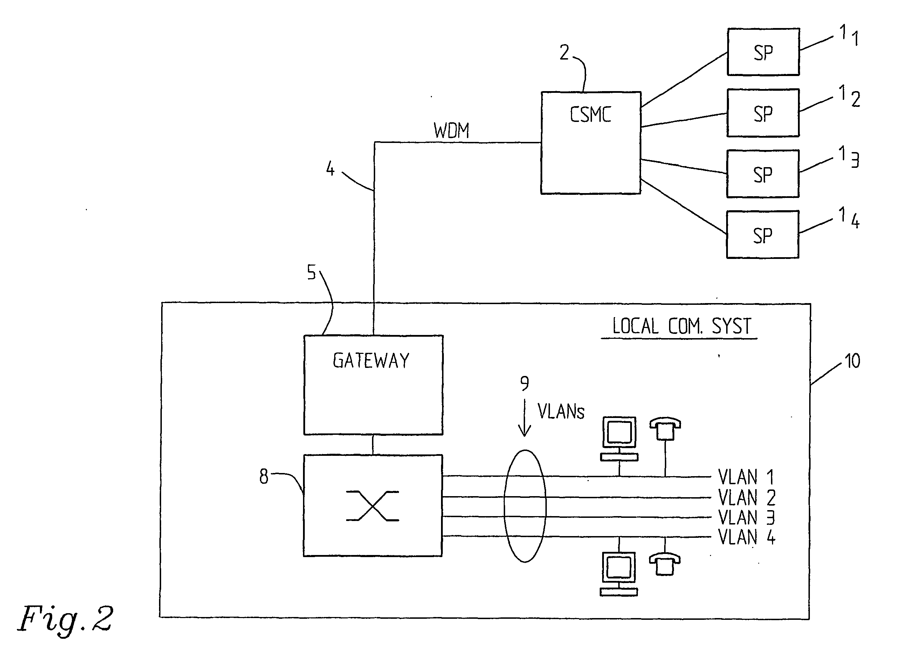

In Fig. 2 four service networks, or particularly service providers SP1₁ , SP1₂, SP1₃, SP1₄ are connected to a Common Service Mapping Center 2. There may of course be more (or fewer) than four service providers. In the common service mapping center 2, hereinafter denoted CSMC, SP1₁, SP1₂, SP1₃, SP1₄ are each assigned one or more wavelengths. In principle the different service providers may subscribe to an optional number of wavelengths. Then the services or service providers (their assigned wavelengths) are connected to a wavelength multiplexed optical fiber (or a copper wire or any other appropriate physical transmission media) and the transmission means of a first communication system, here a point-to-point network 4 which is WDM (Wavelength Division Multiplex) based, is used for transportation of the services towards the end users of local communication systems. It also allows communication from the end users to the service providers, e.g. if some particular services require responses from the end users, or for other reasons, e.g. for telephony which generally is based on two-way communication.

The local communication system 10 here comprises a gateway arrangement 5 wherein the wavelengths are assigned or connected to respective Virtual Local Area Networks (VLAN) 9 of the local communication system 10. Via the gateway arrangement 5 the wavelengths carrying the services of for example one service network group are connected, via switch 8 connecting to a switched domain or comprising a switched domain, connected to specific VLANs, VLAN1, VLAN2, VLAN3 or VLAN4. In a particular implementation Ethernet Technology is used for the virtual local area networks and the switch is an Ethernet switch. How certain network groups are formed, and if, does not form part of the present invention. In an advantageous implementation, however, at least two service network groups, wherein each service network group is a selection amongst the service networks, and wherein ports for the service networks of a predetermined service network group, are configured to belong to at least one Virtual Local Area Network VLAN. Means are also provided for configuration of the port for user machines such as telephones, computers, internet, cable TV etc. to at least one predetermined VLAN. The ports are reconfigurable. This is described in the swedish patent application referred to earlier in the application and which was incorporated herein by a reference thereto. But, this can be done in any appropriate manner.

Moreover it does not have to be Ethernet VLANs but it may also be for example ATM (Asynchronous Transfer Mode) PVC or SPC channels (Permanent Virtual Channels or Switched Virtual Channels) that are used to the respective end users, i.e. the virtual broadcasting domains may comprise PVCS or SPCs.

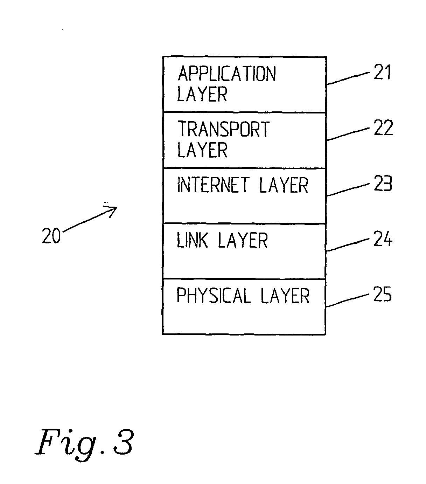

Irrespectively of which is the kind of communication, such as telephony, data, video, telecommunication, the communication is divided into a layered structure as shown in Fig 3. Each layer has its specific task towards overlaying and underlaying layers and together the layers form a stack. Within the Internet technology the so called TCP/IP-stack 20 is used. The communication model shown in Fig.3 contains five layers, namely layer 21 which is the application layer. It is defined by a user process which communicates with another process. The other process may for example be e-mail via the SMTP protocol or it may relate to surfing on the Internet using the HTTP protocol. The transport layer 22 is defined by the fact that control of the transmission of data between end stations can be introduced. The Transmission Control Protocol (TCP) offers a secure transmission of data between the user processes whereas UDP (User Data Protocol) does not. Moreover, in this layer a concept "port" is introduced or defined which however should not be erroneously be taken for a port belonging to a switch. Port in this context has as its task to distinguish between processes in one and the same machine which use the same transport protocol.

The subsequent layer 23 is the Internet layer. The Internet Protocol IP defines this layer. On this level it is possible to offer routing through so called IP routers. The IP protocol, IP addressing and the IP router with IP routing protocols belonging thereto provides the scalability of todays Internet. The IP protocol does not offer any secure transmission. This is handled by overlying protocols, for example TCP, or if UDP is used, application protocols. The next layer 24, the link layer, is a layer defining connection to the physical medium over which data is to be transported. The layer may, but does not have to, offer secure transmission. Furthermore it may implement packet switching or circuit switching. IP leaves it open. Typical link techniques are Ethernet, ATM, frame relay etc. Layer 25 is the physical layer. This layer describes the physical medium which may be an optical fiber, copper, the air etc.

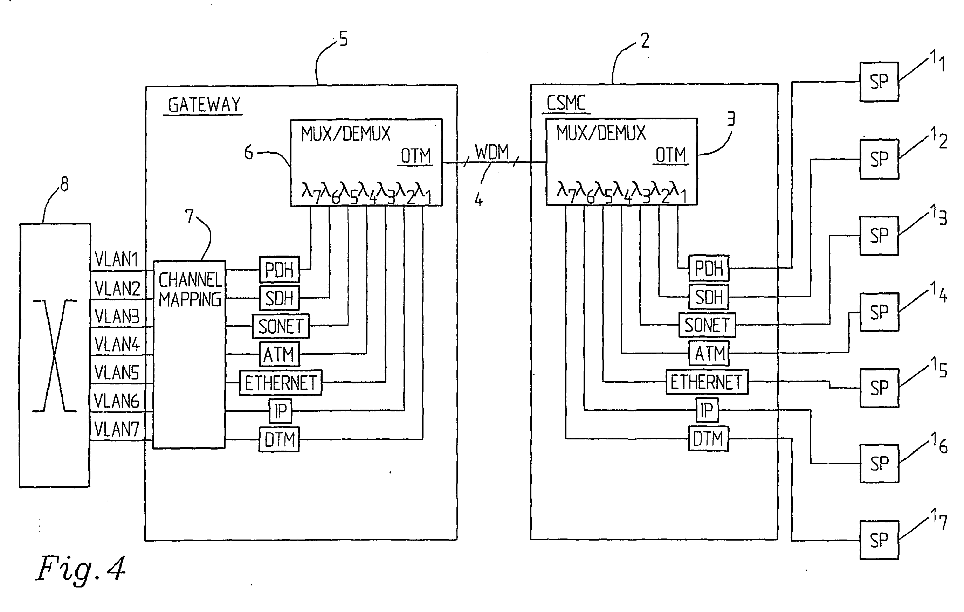

Fig. 4 shows more in detail one embodiment similar to that of Fig. 2 wherein a number of service providers are connected to an CSMC 2 using a WDM-based communication system, here a point-to-point network as in Fig. 2 for communication of services to a local communication system, not shown except for the gateway arrangement 5 and the switch 8.

Service providers SP1₁, SP1₂, SP1₃, SP1₄, SP1₅, SP1₆, SP1₇ in the illustrated embodiment use different communication protocols. This figure is merely taken to illustrate that different protocols can be used and that generally different service providers using different protocols all can be connected to one and the same CSMC 2 in order to subscribe to wavelengths. Here it is supposed that SP1₁ uses PDH (Plesiochronous Digital Hierarchy) and is assigned a first wavelength λ₁, SP1₂ uses SDH (Synchronous Digital Hierarchy) and is assigned a wavelength λ₂, whereas SP1₃ uses SONET and is assigned a wavelength λ₃. SP1₄ uses ATM and is assigned a wavelength λ₄, SP1₅ uses Ethernet and is assigned a wavelength λ₅, SP1₆ uses IP (Internet Protocol) and is assigned wavelength λ₆ whereas SP1₇ uses DTM and is assigned wavelength λ₇. Of course one or more of the service providers may be assigned more than one wavelength.

In Optical Terminal Multiplexer (OTM) the different wavelengths are multiplexed and output on a WDM-based, point-to-point transmission network. The other end point is here supposed to be a local communication system with a gateway arrangement 5. In the gateway arrangement 5 another Optical Terminal Multiplexer (OTM) 6 is provided in which the wavelength multiplexed signal from OTM 3 is demultiplexed and each wavelength is allocated or mapped onto one channel, i.e. the opposite procedure of that as disclosed with reference to the CSMC 2. The wavelength carrying the different services are input to a channel mapping (allocating) means 7 wherein each wavelength is mapped onto one of VLAN 1 - VLAN 7. The channel mapping means may comprise a router but it may also comprise for example an Ethernet switch or any other switch able to handle such a mapping. From switch 8 the services carried by the VLANs are delivered to the respective end users. For communication in the other direction from the end user to the service provider, the respective OTMs operate in the opposite way.

It should be clear that in the above described embodiment, some or all service providers may of course use one and the same communication protocol or some of them may use the same protocol and they may also subscribe to any number of wavelengths, include one or more services for delivery to end users and the invention is also not limited to any particular number of service networks or service providers that are handled in CSMC but it is given by the physical and practical performance of the multiplexing means that are used and on the WDM-based communication system. Thus CSMC may also include more than one multiplexer just as well as the gateway arrangement may include more than one (de)multiplexer.

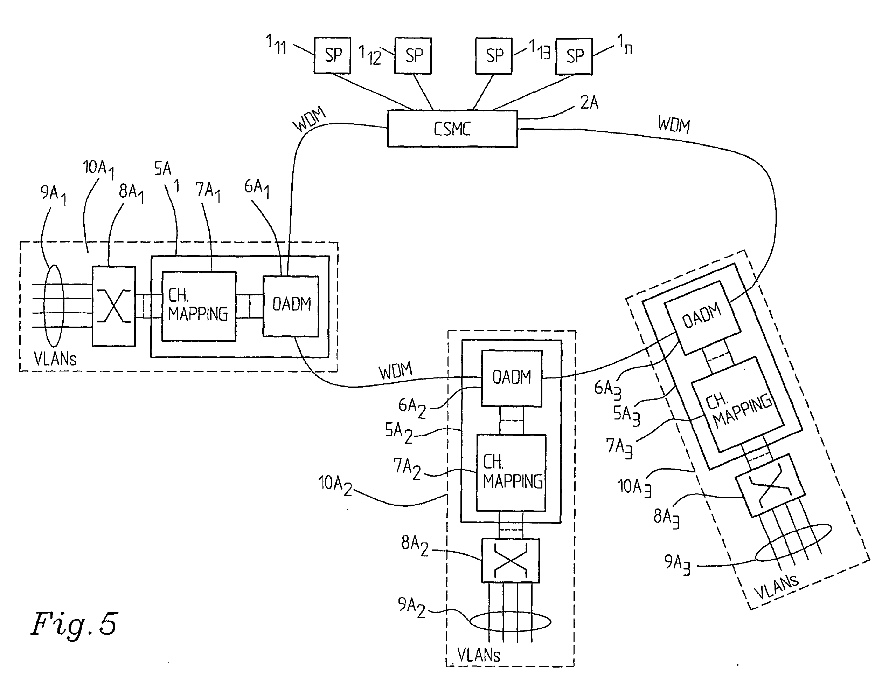

Fig. 5 schematically illustrates one embodiment of the invention wherein the first communication system comprises a ring network such as a Metropolitan Area Network. Service providers SP1₁₁, ..., SP_{N} are assigned wavelengths in a CSMC 2A as described with reference to Fig. 4. Here the services can be provided to three different local communication systems 10A₁, 10A₂, 10A₃ (substantially any number is possible). The functioning is substantially the same as that described with reference to the point-to-point network but the demultiplexing means of the respective gateway arrangements 5A₁, 5A₂, 5A₃ comprise Optical Add Drop Multiplexers (OADM) 6A₁, 6A₂, 6A₃ wherein the appropriate wavelengths are dropped or inserted (added) for communication in the other direction. The OADMs are connected to channel mapping means 7A₁, 7A₂, 7A₃, e.g. routers or switches which in turn are connected to switches 8A₁, 8A₂, 8A₃ for output on the respective assigned VLANs 9A₁, 9A₂, 9A₃ respectively. The switching means 8A₁, 8A₂, 8A₃ are in principle so called Ethernet switches if the Ethernet technology is used. Instead of switches, routers may be used. In still other implementations is possible to have for example more than one CSMC.

In still another implementation, which however not is illustrated herein since it should be obvious to the man skilled in the art how the inventive concept would be implemented, the first communication comprises a star-shaped network.

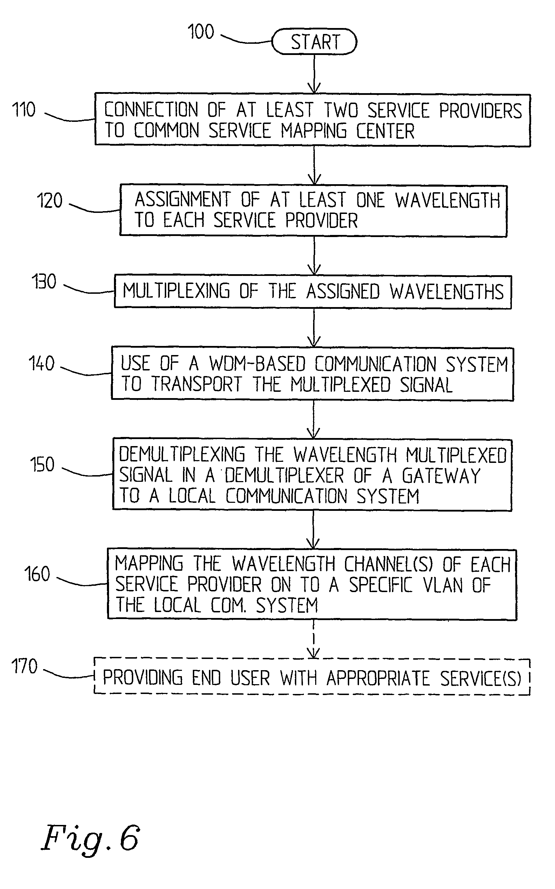

Fig. 6 illustrates, in the form of a flow diagram, the inventive procedure according to which a number of service providers can provide services to a local group of end users. As from the starting point, 100, it is supposed that a number of service providers, at least two, are connected to a common service mapping center, 110. In the CSMC each service provider is assigned at least one wavelength, 120, according to his subscription. In the CSMC, the assigned wavelengths are multiplexed, 130, and the WDM-based communication system is used for transportation of the multiplexed signal towards the local communication system, 140. When arriving at the local communication system, the wavelength multiplexed signal is demultiplexed in a demultiplexer of a gateway arrangement to a local communication system, 150. The gateway arrangement may be included in the local communication system or it may be provided externally thereof, 150. The respective wavelength channel or channels of which service provider are then mapped onto specific VLANs of the local communication system, 160 and finally the end users are provided with the appropriate services, 170, which is illustrated within dashed lines, since this can be done in any appropriate manner.

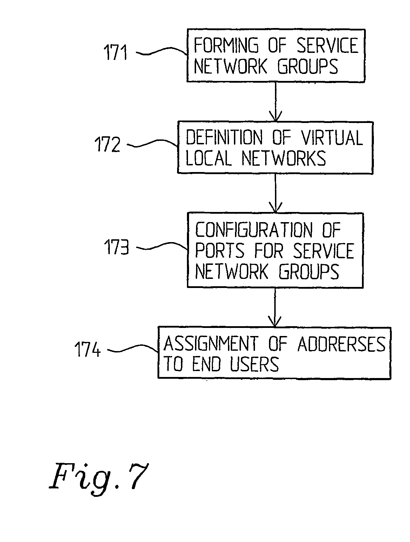

Fig. 7 is a flow diagram, which is a summary of one preferred embodiment, describing how the end users can be connected to certain services, as disclosed in the earlier mentioned incorporated patent application. In a first step 171 a number of service network groups are formed from selected service networks/service providers. The virtual local networks are defined in the subsequent step 172, there upon the ports over which the respective service network groups can be accessed, are configured to belong to respective virtual local network VLAN. Then an end user is assigned an address that corresponds to the selected virtual local network, 174. Service network groups can be changed. Then the last two steps have to be repeated.

The invention is of course not limited to the explicitly illustrated embodiments but it can be varied in a number of ways without departing from the scope of the appended claims. Moreover, some services are bidirectional or require responses from the end users, i.e. a two-way communication, and the functioning is in principle the opposite in the respective mapping arrangements, i.e. the mapping means mapping an input wavelength channel onto a VLAN and the procedure in the CSMC for assigning wavelengths etc.

## Claims

1. An arrangement for providing communication between a number of service networks (1₁-1₄;1₁-1₇;1₁₁-1_{N}) and a number of second, local, telecommunication systems (10;10A₁,10A₂,10A₃) using a first communications system (4), wherein the first communication system (4) is WDM-based, a number of common service mapping centers (2;2A) are provided, each including wavelength assignment and multiplexing means (3) for assigning specific wavelengths to a number of services/service networks (1₁-1₄;1₁-1₇; 1₁₁-1_{N}) and for multiplexing said wavelengths onto transmission means of the first, WDM-based communication system (4), comprising a wavelength multiplexed optical fiber, the common service mapping center(s) (2;2A) being connected to the transmission means of the first communication system, and in that a number of gateway arrangements (5;5A₁,5A₂,5A₃) are connected to the transmission means,
**characterized in that** each gateway arrangement includes wavelength (de)multiplexing means (6;6A₁,6A₂,6A₃) and channel allocation means comprising a switching device (7;7A₁,7A₂,7A₃) for directly mapping the assigned, specific wavelengths onto predetermined virtual broadcast domains (VLAN1-4;VLAN1-7;9;9A₁,9A₂,9A₃) consisting of virtual local networks (VLAN) of the second, local communication system (10;10A₁,10A₂,10A₃) to provide services to end users of the local communication systems.

2. An arrangement according to claim 1,
**characterized in**
**that** to each gateway arrangement a switch (8) is provided for connecting the gateway arrangement (5;5A₁,5A₂,5A₃) to a switched domain.

3. An arrangement according to any one of the preceding claims,
**characterized in**
**that** the service networks (1₁-1₄;1₁-1₇;1₁₁-1_{N}) comprise service providers.

4. An arrangement according to claim 3,
**characterized in**
**that** each service provider connected to a common service mapping center (2;2A) is assigned one or more wavelengths in the common service mapping center (2;2A).

5. An arrangement according to claim 3 or 4,
**characterized in**
**that** a number of services are grouped together and assigned one or more wavelengths in the common service mapping center (2;2A).

6. An arrangement according to anyone of the preceding claims,
**characterized in**
**the** channel allocation means (7; 7A₁, 7A₂, 7A₃) comprises a routing device.

7. An arrangement according to any one of the preceding claims,
**characterized in**
**that** the first WDM-based communication system (4) comprises a point-to-point transmission network, that the multiplexing means (3) of the common service mapping center (2) comprises an Optical Terminal Multiplexer (OTM) and in that the (de)multiplexing means (6) of the gateway arrangement (5) comprises another Optical Terminal Multiplexer (OTM).

8. An arrangement according to any one of claims 1-6,
**characterized in**
**that** the first WDM-based communication system comprises a ring network or a star-shaped network and in that the demultiplexing means (6A₁,6A₂,6A₃) of the gateway arrangements (5A₁,5A₂,5A₃) comprise Optical Add Drop Multiplexers (OADM).

9. An arrangement according to claim 8,
**characterized in**
**that** the first communication system is a Metropolitan Area Network.

10. An arrangement according to any one of the preceding claims,
**characterized in**
**that** the service networks (1₁-1₄;1₁-1₇;1₁₁-1_{N}) use the same or different communication protocols, such as PDH, SDH, SONET, ATM, Ethernet, IP, DTM.

11. An arrangement according to claim 10,
**characterized in**
**that** WDM transport channels comprise E1 channels (2Mbps), E2 channels (8Mbps), E3 (34Mbps), E4 or E5 channels based on ATM, SDH, DTM or PDH.

12. An arrangement according to any one of the preceding claims,
**characterized in**
**that** the first communication protocol used as the WDM channel transport protocol is PDH, SDH, ATM, DTM, IP over WDM, Ethernet over WDM.

13. An arrangement according to any one of the preceding claims,
**characterized in**
**that** the local telecommunication systems comprise broadband access systems.

14. An arrangement according to claim 12 or 13,
**characterized in**
**that** the local communication system(s) use Ethernet VLAN technology or ATM technology.

15. An arrangement according to any one of the preceding claims,
**characterized in**
**that** each wavelength is assigned a separate input port at the routing/switching device (7;7A₁;7A₂;7A₃).

16. An arrangement according to any one of the preceding claims,
**characterized in**
**that** the service providers (1₁,-1₄;1₁-1₇;1₁₁-1_{N}) are assigned a broadband channel to the end users over the WDM-based first communication system.

17. An arrangement according to claim 12,
**characterized in**
**that** the first communication system is IP-based and in that each or some of the routing/switching devices (7;7A₁;7A₂;7A₃) comprise an IP-router.

18. A method of providing communication between a number of service networks and a number of second, local, telecommunication systems using a first telecommunication system using a first communication protocol, which method comprises the steps of:
- assigning one or more specific wavelengths to each service network or specific service of a service network;
- multiplexing the assigned, specific wavelengths;
- transferring the multiplexed signal over the transmission means of the first telecommunication system, which is WDM-based, to a gateway arrangement;
- demultiplexing the wavelength-multiplexed signal;
**characterized in that** the method comprises the steps of:
- directly assigning the specific wavelengths onto predetermined virtual broadcast domains (VLAN1-4; VLAN1-7; 9; 9A₁; 9A₂; 9A₃) comprising virtual local networks (VLAN);
- routing the service(s) of the service network(s) to respective end user using the corresponding virtual broadcasting domain comprising virtual local networks (VLAN).

19. A method according to claim 18,
**characterized in**
**that** the virtual local area networks/virtual broadcast domains are created using Ethernet, Token Ring, FDDI or ATM.

20. A method according to any one of claims 18-19,
**characterized in**
**that** the WDM-based first communication system is a point-to-point transmission network.

21. A method according to any one of claims 18-19,
**characterized in**
**that** the WDM-based first communication system comprises a ring or star-shaped network, e.g. a Metropolitan Area Network.

22. A method according to claim 21,
**characterized in**
**that** it comprises the steps of:
- dropping relevant wavelengths at an Optical Add Drop Multiplexer (OADM) connected to a routing/switching device;
- demultiplexing the dropped wavelengths in the OADM;
- sending the other wavelengths on to other OADM:s until they are to be dropped.

23. A method according to any one of claims 18-22,
**characterized in**
**that** it comprises the step of using TCP/IP as a communication protocol.

## Patentansprüche

1. Anordnung zum Bereitstellen einer Kommunikation zwischen einer Anzahl von Dienstnetzwerken (l₁-l₄; l₁-l₇; l₁₁-l_{N}) und einer Anzahl zweiter, lokaler Telekommunikationssysteme (10; 10A₁, 10A₂, 10A₃), die ein erstes Kommunikationssystem (4) verwenden, wobei das erste Kommunikationssystem (4) WDM-basiert ist, wobei eine Anzahl von Abbildungszentralen eines gemeinsamen Dienstes (2; 2A) bereitgestellt sind, die jeweils eine Wellenlängenzuweisungs- und Multiplexeinrichtung (3) enthalten zum Zuweisen spezifischer Wellenlängen an eine Anzahl von Dienste/Dienst-Netzwerken (1₁-1₄; 1₁-1₇; 1₁₁-1_{N}) und zum Multiplexen der Wellenlängen auf eine Übertragungseinrichtung des ersten, WDM-basierten Kommunikationssystems (4), mit einer Wellenlängen-gemultiplexten optischen Faser, wobei die Abbildungszentrale(n) eines gemeinsamen Dienstes (2;2A) mit der Übertragungseinrichtung des ersten Kommunikationssystems verbunden ist/sind, und wobei eine Anzahl Gateway-Anordnungen (5; 5A₁, 5A₂, 5A₃) mit der Übertragungseinrichtung verbunden sind,
**dadurch gekennzeichnet, dass** jede Gateway-Anordnung eine Wellenlängen-(De)Multiplexeinrichtung (6; 6A₁, 6A₂, 6A₃) und eine Kanalzuteilungseinrichtung enthält, die eine Umschaltvorrichtung (7; 7A₁, 7A₂, 7A₃) umfasst zum direkten Abbilden der zugewiesenen spezifischen Wellenlängen auf vorbestimmte virtuelle Broadcast-Domänen (VLAN1-4; VLAN1-7; 9; 9A₁, 9A₂, 9A₃), die aus virtuellen lokalen Netzwerken (VLAN) des zweiten, lokalen Kommunikationssystems (10; 10A₁, 10A₂, 10A₃) bestehen, um Endbenutzern der lokalen Kommunikationssysteme Dienste bereitzustellen.

2. Anordnung gemäß Anspruch 1, **dadurch gekennzeichnet, dass** jeder Gateway-Anordnung ein Switch (8) bereitgestellt ist zum Verbinden der Gateway-Anordnung (5; 5A₁, 5A₂, 5A₃) mit einer vermittelten Domäne.

3. Anordnung gemäß einem der vorhergehenden Ansprüche,
**dadurch gekennzeichnet, dass** die Dienstnetzwerke (1₁-1₄; 1₁-1₇; 1₁₁-1_{N}) Dienst-Provider umfassen.

4. Anordnung gemäß Anspruch 3, **dadurch gekennzeichnet, dass** jedem Dienst-Provider, der mit einer Abbildungszentrale eines gemeinsamen Dienstes (2; 2A) verbunden ist, eine oder mehrere Wellenlängen in der Abbildungszentrale eines gemeinsamen Dienstes (2; 2A) zugewiesen ist/sind.

5. Anordnung gemäß Anspruch 3 oder 4, **dadurch gekennzeichnet, dass** eine Anzahl von Diensten zusammengruppiert ist und dieser eine oder mehrere Wellenlängen in der Abbildungszentrale eines gemeinsamen Dienstes (2; 2A) zugewiesen ist/sind.

6. Anordnung gemäß einem der vorhergehenden Ansprüche,
**dadurch gekennzeichnet, dass** die Kanalzuteilungseinrichtung (7; 7A₁, 7A₂, 7A₃) eine Routing-Vorrichtung umfasst.

7. Anordnung gemäß einem der vorhergehenden Ansprüche,
**dadurch gekennzeichnet, dass** das erste WDM-basierte Kommunikationssystem (4) ein Punkt-zu-Punkt-Übertragungsnetzwerk umfasst, dass die Multiplexeinrichtung (3) der Abbildungszentrale eines gemeinsamen Dienstes (2) einen Optical Terminal Multiplexer (OTM) umfasst, und dass die (De)Multiplexeinrichtung (6) der Gateway-Anordnung (5) einen anderen Optical Terminal Multiplexer (OTM) umfasst.

8. Anordnung gemäß einem der Ansprüche 1 bis 6, **dadurch gekennzeichnet, dass** das erste WDM-basierte Kommunikationssystem ein Ringnetzwerk oder ein sternförmiges Netzwerk umfasst, und dass die Demultiplexeinrichtungen (6A₁, 6A₂, 6A₃) der Gateway-Anordnungen (5A₁, 5A₂, 5A₃) Optical Add Drop Multiplexer (OADM) umfassen.

9. Anordnung gemäß Anspruch 8, **dadurch gekennzeichnet, dass** das erste Kommunikationssystem ein Metropolitan Area Network ist.

10. Anordnung gemäß einem der vorherigen Ansprüche, **dadurch gekennzeichnet, dass** die Dienstnetzwerke (l₁-l₄; l₁-l₇; l₁₁-l_{N}) dieselben oder unterschiedliche Kommunikationsprotokolle verwenden, so wie PDH, SDH, SONET, ATM, Ethernet, IP, DTM.

11. Anordnung gemäß Anspruch 10, **dadurch gekennzeichnet, dass** die WDM-Transportkanäle E1-Kanäle (2Mbps), E2-Kanäle (8Mbps), E3- (34Mbps), E4- oder E5-Kanäle auf Grundlage von ATM, SDH, DTM oder PDH umfassen.

12. Anordnung gemäß einem der vorherigen Ansprüche, **dadurch gekennzeichnet, dass** das als das WDM-Kanaltransportprotokoll verwendete erste Kommunikationsprotokoll PDH, SDH, ATM, DTM, IP over WDM, Ethernet over WDM ist.

13. Anordnung gemäß einem der vorherigen Ansprüche, **dadurch gekennzeichnet, dass** die lokalen Telekommunikationssysteme Breitbandzugangssysteme umfassen.

14. Anordnung gemäß Anspruch 12 oder 13, **dadurch gekennzeichnet, dass** das/die lokale(n) Kommunikationssystem(e) eine Ethernet VLAN-Technologie oder ATM-Technologie verwendet/verwenden.

15. Anordnung gemäß einem der vorhergehenden Ansprüche,
**dadurch gekennzeichnet, dass** jeder Wellenlänge ein separater Eingangsport bei der Routing/Vermittlungsvorrichtung (7; 7A₁, 7A₂, 7A₃) zugewiesen ist.

16. Anordnung gemäß einem der vorhergehenden Ansprüche,
**dadurch gekennzeichnet, dass** die Dienst-Provider (1₁-1₄; 1₁-1₇; 1₁₁-1_{N}) einem Breitbandkanal zu den Endbenutzern über das WDM-basierte erste Kommunikationssystem zugewiesen sind.

17. Anordnung gemäß Anspruch 12, **dadurch gekennzeichnet, dass** das erste Kommunikationssystem IP-basiert ist, und dass jede oder manche der Routing/Vermittlungsvorrichtungen (7; 7A₁, 7A₂, 7A₃) einen IP-Router umfasst/umfassen.

18. Verfahren zum Bereitstellen einer Kommunikation zwischen einer Anzahl von Dienstnetzwerken und einer Anzahl zweiter, lokaler Telekommunikationssysteme, mit Verwendung eines ersten Telekommunikationssystems, mit Verwendung eines ersten Kommunikationsprotokolls, wobei das Verfahren die Schritte umfasst zum:
- Zuweisen einer oder mehrerer spezifischer Wellenlängen für jedes Dienstnetzwerk oder einen spezifischen Dienst eines Dienstnetzwerks;
- Multiplexen der zugewiesenen spezifischen Wellenlängen;
- Transferieren des gemultiplexten Signals über die Übertragungseinrichtung des ersten Telekommunikationssystems, welches WDM-basiert ist, an eine Gateway-Anordnung;
- Demultiplexen des Wellenlängen-gemultiplexten Signals;
**dadurch gekennzeichnet, dass** das Verfahren die Schritte umfasst zum:
- direkten Zuweisen der spezifischen Wellenlängen auf vorbestimmte virtuelle Broadcast-Domänen (VLANl-4; VLAN1-7; 9; 9A₁, 9A₂, 9A₃), die virtuelle lokale Netzwerke (VLAN) umfassen;
- Routen des/der Dienstes/Dienste des/der Dienstnetzwerke(s) an einen jeweiligen Endbenutzer mit Verwendung der entsprechenden virtuellen Broadcast-Domäne, die virtuelle lokale Netzwerke (VLAN) umfasst.

19. Verfahren gemäß Anspruch 18, **dadurch gekennzeichnet, dass** die virtuellen Lokalbereichsnetzwerke/virtuellen Broadcast-Domänen mit Verwendung von Ethernet, Token Ring, FDDI oder ATM erschaffen werden.

20. Verfahren gemäß einem der Ansprüche 18 bis 19, **dadurch gekennzeichnet, dass** das WDM-basierte erste Kommunikationssystem ein Punkt-zu-Punkt-Übertragungsnetzwerk ist.

21. Verfahren gemäß einem der Ansprüche 18 bis 19, **dadurch gekennzeichnet, dass** das WDM-basierte erste Kommunikationssystem ein ring- oder sternförmiges Netzwerk umfasst, z.B. ein Metropolitan Area Network.

22. Verfahren gemäß Anspruch 21, **dadurch gekennzeichnet, dass** es die Schritte umfasst zum:
- Entnehmen relevanter Wellenlängen bei einem mit einer Routing/Vermittlungsvorrichtung verbundenen Optical Add Drop Multiplexer (OADM);
- Demultiplexen der entnommenen Wellenlängen in dem OADM;
- Senden der anderen Wellenlängen auf den anderen OADM:s, bis sie zu entnehmen sind.

23. Verfahren gemäß einem der Ansprüche 18 bis 22, **dadurch gekennzeichnet, dass** es den Schritt zum Verwenden von TCP/IP als ein Kommunikationsprotokoll umfasst.

## Revendications

1. Dispositif pour effectuer des communications entre un certain nombre de réseaux de services (1₁-1₄ ; 1₁-1₇ ; 1₁₁-1_{N}) et un certain nombre de deuxièmes systèmes de télécommunication locaux (10 ; 10A₁, 10A₂, 10A₃) en utilisant un premier système de communications (4), dans lequel le premier système de communications (4) est de type WDM (Wavelength Division Multiplexing pour Multiplexage par Répartition en Longueur d'onde), dans lequel un certain nombre de centres de mise en correspondance de services communs (2 ; 2A) sont prévus, chacun d'entre eux comportant un moyen d'affectation et de multiplexage de longueur d'onde (3) pour affecter des longueurs d'onde spécifiques à un certain nombre de services/réseaux de services (1₁-1₄ ; 1₁-1₇ ; 1₁₁-1_{N}) et pour multiplexer lesdites longueurs d'onde sur des moyens de transmission du premier système de communications de type WDM (4), comprenant une fibre optique multiplexée en longueur d'onde, le(s) centre(s) de mise en correspondance de services communs (2 ; 2A) étant connectés au moyen de transmission du premier système de communications, et dans lequel un certain nombre de dispositifs passerelles (5 ; 5A₁, 5A₂, 5A₃) sont connectés au moyen de transmission,
**caractérisé en ce que** chaque dispositif passerelle comprend des moyens de (dé)multiplexage en longueur d'onde (6 ; 6A₁, 6A₂, 6A₃) et des moyens d'allocation de canaux comprenant un dispositif de commutation (7 ; 7A₁, 7A₂, 7A₃) pour mettre directement en correspondance les longueurs d'onde spécifiques affectées avec des domaines de diffusion virtuels prédéterminés (VLAN1-4 ; VLAN1-7 ; 9 ; 9A₁, 9A₂, 9A₃) constitués de réseaux locaux virtuels (VLAN pour Virtual Local Area Network) du deuxième système de communication local (10 ; 10A₁, 10A₂, 10A₃) afin de fournir des services à des utilisateurs finaux des systèmes de communication locaux.

2. Dispositif selon la revendication 1,
**caractérisé en ce que**
chaque dispositif passerelle est muni d'un commutateur (8) pour connecter le dispositif passerelle (5 ; 5A₁, 5A₂, 5A₃) à un domaine commuté.

3. Dispositif selon l'une quelconque des revendications précédentes,
**caractérisé en ce que** les réseaux de services (l₁-l₄ ; l₁-l₇ ; l₁₁-l_{N}) comprennent des fournisseurs de services.

4. Dispositif selon la revendication 3, **caractérisé en ce qu'**on affecte à chaque fournisseur de service connecté à un centre de mise en correspondance de services communs (2 ; 2A) une ou plusieurs longueurs d'onde dans le centre de mise en correspondance de services communs (2 ; 2A).

5. Dispositif selon la revendication 3 ou 4,
**caractérisé en ce qu'**un certain nombre de services sont regroupés les uns avec les autres et **en ce qu'**on leur affecte une ou plusieurs longueurs d'onde dans le centre de mise en correspondance de services communs (2 ; 2A).

6. Dispositif selon l'une quelconque des revendications précédentes, **caractérisé en ce que** le moyen d'allocation de canal (7 ; 7A₁, 7A₂, 7A₃) comprend un dispositif de routage.

7. Dispositif selon l'une quelconque des revendications précédentes, **caractérisé en ce que** le premier système de communication de type WDM (4) comprend un réseau de transmission point à point, **en ce que** le moyen de multiplexage (3) du centre de mise en correspondance de services communs (2) comprend un Multiplexeur de Terminal Optique (OTM pour Optical Terminal Multiplexer) et **en ce que** le moyen de (dé)multiplexage (6) du dispositif passerelle (5) comprend un autre Multiplexeur de Terminal Optique (OTM).

8. Dispositif selon l'une quelconque des revendications 1-6, **caractérisé en ce que** le premier système de communication de type WDM comprend un réseau annulaire ou un réseau en forme d'étoile et **en ce que** les moyens de démultiplexage (6A₁, 6A₂, 6A₃) des dispositifs passerelles (5A₁, 5A₂, 5A₃) comprennent des Multiplexeurs Optiques d'Insertion-Extraction (OADM pour Optical Add Drop Multiplexers).

9. Dispositif selon la revendication 8, **caractérisé en ce que** le premier système de communication est un Réseau Métropolitain.

10. Dispositif selon l'une quelconque des revendications précédentes, **caractérisé en ce que** les réseaux de services (1₁-1₄ ; 1₁-1₇ ; 1₁₁-1_{N}) utilisent des protocoles de communication identiques ou différents, tels que les protocoles PDH, SDH, SONET, ATM, Ethernet, IP, DTM.

11. Dispositif selon la revendication 10, **caractérisé en ce que** les canaux de transport WDM comprennent des canaux E1 (2Mbps), des canaux E2 (8Mbps), des canaux E3 (34Mbps), et des canaux E4 ou E5 basés sur ATM, SDH, DTM ou PDH.

12. Dispositif selon l'une quelconque des revendications précédentes, **caractérisé en ce que** le premier protocole de communication utilisé en tant que protocole de transport de canaux WDM est le protocole PDH, SDH, ATM, DTM,IP sur WDM, Ethernet sur WDM.

13. Dispositif selon l'une quelconque des revendications précédentes, **caractérisé en ce que** les systèmes de télécommunications locaux comprennent des systèmes d'accès à large bande.

14. Dispositif selon la revendication 12 ou 13, **caractérisé en ce que** le(s) système(s) de communication local ou locaux utilise ou utilisent la technologie VLAN Ethernet ou la technologie ATM.

15. Dispositif selon l'une quelconque des revendications précédentes, **caractérisé en ce qu'**on affecte à chaque longueur d'onde un port d'entrée séparé sur le dispositif de routage/commutation (7 ; 7A₁, 7A₂, 7A₃) .

16. Dispositif selon l'une quelconque des revendications précédentes, **caractérisé en ce qu'**on affecte aux fournisseurs de services (1₁-1₄ ; 1₁-1₇ ; 1₁₁-1_{N}) un canal à large bande pour les utilisateurs finaux par l'intermédiaire du premier système de communication de type WDM.

17. Dispositif selon la revendication 12, **caractérisé en ce que** le premier système de communication est de type IP et **en ce que** chacun ou la totalité des dispositifs de routage/commutation (7 ; 7A₁, 7A₂, 7A₃) comprend ou comprennent un routeur IP.

18. Procédé d'établissement de communications entre un certain nombre de réseaux de services et un certain nombre de deuxièmes systèmes de télécommunication locaux en utilisant un premier système de télécommunication faisant appel à un premier protocole de communication, lequel procédé comprend les étapes consistant à :
- affecter une ou plusieurs longueurs d'onde spécifiques à chaque réseau de services ou à chaque service spécifique d'un réseau de services ;
- multiplexer les longueurs d'onde spécifiques affectées ;
- transférer le signal multiplexé par l'intermédiaire du moyen de transmission du premier système de communication, qui est de type WDM, vers un dispositif passerelle ;
- démultiplexer le signal multiplexé en longueur d'onde ;
**caractérisé en ce que** le procédé comprend les étapes consistant à :
- affecter directement les longueurs d'onde spécifiques à des domaines de diffusion virtuels prédéterminés (VLAN1-4 ; VLAN1-7 ; 9 ; 9A₁, 9A₂, 9A₃) ;
- acheminer le(s) service(s) du ou des réseau(x) de services vers un utilisateur final respectif en utilisant le domaine de diffusion virtuel correspondant comprenant des réseaux locaux virtuels (VLAN).

19. Procédé selon la revendication 18, **caractérisé en ce que** les réseaux locaux virtuels/domaines de diffusion virtuels sont créés en utilisant l'Ethernet, un anneau à jetons, le FDDI ou l'ATM.

20. Procédé selon l'une quelconque des revendications 18-19, **caractérisé en ce que** le premier système de communication de type WDM est un réseau de transmission point à point.

21. Procédé selon l'une quelconque des revendications 18-19, **caractérisé en ce que** le premier système de communication de type WDM comprend un réseau en anneau ou en étoile, par exemple un réseau Métropolitain.

22. Procédé selon la revendication 21, **caractérisé en ce qu'**il comprend les étapes consistant à :
- extraire des longueurs d'onde pertinentes dans un Multiplexeur Optique d'Insertion-Extraction (OADM) connecté à un dispositif de routage/commutation ;
- démultiplexer les longueurs d'onde extraites dans l'OADM ;
- envoyer les autres longueurs d'onde vers d'autres multiplexeurs OADM jusqu'à ce qu'elles soient extraites.

23. Procédé selon l'une quelconque des revendications 18-22, **caractérisé en ce qu'**il comprend l'étape d'utilisation du protocole TCP/IP en tant que protocole de communication.
